# EUROPEAN PATENT SPECIFICATION

(11) **EP 3 464 877 B1**
(45) Date of publication and mention of the grant of the patent: **17.02.2021**
(21) Application number: 17803135.7
(22) Date of filing: 10.05.2017
(51) Int. Cl.: F03B 13/18

(54) **BALANCED WAVE POWER CONVERTER SYSTEM**
AUSGEGLICHENES WELLENLEISTUNGSWANDLERSYSTEM
SYSTÈME CONVERTISSEUR D'ÉNERGIE DES VAGUES ÉQUILIBRÉ

(30) Priority: 25.05.2016 NO 20160894
(43) Date of publication of application: 10.04.2019
(73) Proprietor: Westby, Tov, 0381 Oslo (NO); Skotte, Asbjörn, 6240 Örskog (NO)
(72) Inventor: Westby, Tov, 0381 Oslo (NO); Skotte, Asbjörn, 6240 Örskog (NO)
(74) Representative: Curo AS
(86) International application number: PCT/NO2017/050115
(87) International publication number: WO 2017/204652

(56) References cited:
- WO-A1-99/28623
- WO-A1-2007/084013
- WO-A1-2009/140615
- WO-A1-2011/065838
- WO-A1-2012/005597
- WO-A1-2014/094778
- CN-A- 104 018 982
- CN-A- 104 265 555
- US-B2- 7 683 500
- TECHLER, L: 'Could Magnetic Gears Make Wind Turbines Say Goodbye to Mechanical Gearboxes?' MACHINE DESIGN, [Online] 14 June 2014, XP055445183 Retrieved from the Internet: <URL:http://www.machinedesign.com/motorsdri ves/could-magnetic-gears-make-wind-turbines -say-goodbye-mechanical- gearboxes> [retrieved on 2017-08-23]

## Description

The present invention is related to a balanced wave power converter system according to the preamble of claim 1.

Especially, the present invention is related to a balanced wave power converter system including at least two buoys connected by a wire, one at the surface absorbing wave energy directly from wave movements, and one submerged buoy with buoyancy, which buoys provide vertical movements in both directions for each wave movement operating a generator by means of the wire for production of energy.

### Background

Different wave power converters have been developed having individual buoys which by means of their elevation during wave movements transfer power to a generator, a hydraulic pump system or another mechanical energy converter. Wave power converters with accompanying control system form a unit which is arranged in sea areas having as even waves as possible.

Such wave power converters have the advantage over raft systems that they are easier to make storm resistant. Still, such buoys with accompanying parts are vulnerable to breakdown during storms. This has lead to increased dimensions of mechanical elements with accompanying high costs. In reality it has not yet been possible to build wave power plants with acceptable lifetime and acceptable energy costs based on such wave power converters, due to the need for large dimensions in order to withstand extreme weather, which only is present during a few percentage of the normal operating time.

In addition it is difficult to achieve an optimal buoyant level for the buoys during operation, mainly due to wave influences, but also due to other water currents and wind. This has also negatively influenced the operating economy.

In Norwegian patent No. 321 085 (Ocean Energy) is described the use of ballast tanks to immerse rafts of buoyant bodies during storm. This has not provided a sufficient storm protection, mainly due to the costs and inconvenience in use.

From US patent No. 4,742,241 (Melvin) it is known to pull a raft with wave converters by means of winches. Neither this publication has made a basis for constructing a sufficient wave power plant.

US patent No. 7,683,500 describes a device and a method for wave energy conversion. In one embodiment of the device a buoy, a shaft and an electric generator is described. The shaft is connected to the buoy in such a manner that when the buoy moves vertically in response to a passing wave, the shaft is rotated. The shaft is connected to the generator such that the shaft rotation generates electric power. A solution like this has large disadvantages, among others it is costly to implement, it requires a substantial and costly maintenance and the lifetime will be rather limited due to the lifetime of the shaft and bearings, which is a well known problem in relation with maritime environments and therefore seeks to be avoided to the extent possible.

From WO 2009056854 it is known a device for wave conversion based on vertical movement of a buoy. Vertical movement of the buoy is controlled by letting water in through an upper surface of the buoy. The upper surface of the buoy is used to generate hydrodynamic forces that act downwards against upwardly directed forces on a lower surface of the buoy and thereby effectively dampen its movement in case of the presence of a wave which would normally cause undesired large vertical movements of the buoy. The movement of water on the upper surface can be controlled by adjusting the depth of the float.

Both US 7,683,500 and WO 2009056854 teach that the buoy can be immersed under the sea surface during storm or the like, but they fail in that they can take in water as ballast but cannot get rid of the water and will therefore remain under water if they take in enough water to remove its buoyancy.

In recent years other types of devices for conversion of wave power to be arranged on the seafloor have been developed. Linear generators, hydraulic pumps and recently NASA, among others, have launched a piezo-electric "tension-wire" that can produce energy directly when tensioned.

These are smart solutions in the sense that they avoid the tough weather conditions at the surface and most of these are patented in different variants. Nothing is done, however, with respect to the buoy that shall float on the surface, in relation to the extreme weather conditions they may be subjected to. As mentioned above it is described, among others, in US 7,683,500 and WO 2009056854, that the buoy may be immersed in the water during storm, but as mentioned these are burdened with disadvantages and are not provided with any automatic solution to handle this.

A solution which improves the above mentioned drawbacks is described in WO2011065838 where it is described a method for manoeuvring a buoy of a wave power converter, said wave power converter including a mechanical-electric, mechanical-hydraulic or piezo-electric energy converter which is arranged in the sea under the buoy, said buoy and wave power converter being connected by a wire, and which buoy is provided with at least one ballast tank for controlling the buoyancy of the buoy. The method includes, by means of measuring equipment acquiring information regarding wire tension, filling level/pressure in the ballast tank and stroke of the energy converter, and based on this information controlling the buoyancy of the buoy by supplying/discharging water/air to/from the ballast tank while at the same time adjusting the tension of the wire by operating a winch arranged in the buoy. The object of this controlling is to lower or raise the buoy without removing the wire tension, and to provide optimal strokes for the energy converter in relation to the wave movements at the surface affecting the buoy. The buoy is further arranged to dive when the wave height exceeds a predetermined limit or other meteorological information indicates that unfavourable conditions that may cause buoyant body breakdown will occur. This solution however suffer from that the buoy cannot be submerged over longer time. Another solution is described in WO 2009/140615.

Common features for the known technologies are that they do not satisfy the requirements to production cost, operation, lifetime, degree of efficiency and probability of survival and that they therefore do not offer an economically defensible solution.

Further, the prior art solutions suffer from that they are not arranged to handle unpredictable jerky movements resulting in failure in generators, gearbox or other mechanics. Unpredictable jerky movements also results in uneven rotation speed for the generator which does not provide optimal energy production.

Accordingly, there is a need for a solution arranged to handle unpredictable jerky movements as well as protection during storm.

### Object

The main object of the present invention is to improve the wave power technology so that it becomes economically competitive with respect to operational reliability as well as operating economy, hereunder to provide solutions for the mentioned problems of prior art.

More specifically it is an object to provide a wave power technology which is more weather resistant and more resistant to storm and other mechanical strains.

It is further an object of the present invention to provide a balanced wave power converter system arranged for handling jerky movements affecting such systems.

An object of the present invention is to provide a balanced wave power converter system which can be submerged over a long period of time.

A further object of the present invention is to provide a balanced wave power converter system which requires minimal or non control during idle operation.

It is further an object of the present invention to provide a balanced wave power converter system reducing the installation and maintenance costs compared to prior art solutions.

An object of the present invention is to provide a balanced wave power converter system being reliable and capable of handling all daily wave heights.

It is further an object of the present invention to provide a balanced wave power converter system enabling the use of less expensive generator solutions than the prior art solutions.

### The invention

A balanced wave power converter system in accordance with the present invention is defined in claim 1. Preferred features of the balanced wave power converter system are disclosed in the remaining claims.

The balanced system consist of at least two buoys, wherein at least one is arranged at the water surface absorbing wave energy directly by following the wave movements based on the point absorber principle, and at least one submerged buoy, wherein the surface buoy and submerged buoy is connected by a wire and where the wire is connected to at least one generator arranged in a housing at the seabed.

According to a first embodiment of the present invention the wire is connected to the generator by means of a fly-wheel.

According to the first embodiment of the present invention the submerged buoy is arranged for accommodating the wire, such that the wire is fixed to the surface buoy at one side, extends down through the submerged buoy to the generator fly-wheel and further extends upwards and is connected to the submerged buoy at the other side.

The submerged buoy will typically be arranged some distance below the surface and above the generator, typically 10-15 meters above the seabed and generator. The submerged buoy will have buoyancy being lower than the surface buoy, typically half or lower of the buoyancy of the surface buoy so that it will be counterweight for the surface buoy.

In a preferable embodiment the surface buoy is attached to the wire via rotational link so that the wire will not become twisted if the surface buoy rotates due to wind or wave affecting the surface buoy.

According to a preferable embodiment of the present invention there is arranged a magnetic lead screw between the fly-wheel and the generator.

Accordingly, the vertical movements provide a rotation of the generator in both directions for each passing wave.

An advantage with the present invention over prior art is that, as the system includes a submerged buoy with buoyancy arranged to pull the wire up from the seabed and that wire is arranged to the generator at the seabed via a fly-wheel, is that one will have a long stroke length. It will by the present invention be possible with a stroke length of up to 10-15 meters (at normal installation at 40-50 meter depth), and the submerged buoy will at all time ensure that the wire is tensioned and provides automatic compensation for tide differences and so-called heave-compensation when a sudden unpredicted choppy or large wave is coming, known as jerky movements.

According to the present invention it is provided a continuous counteraction of jerky movements by that there is arranged a magnetic lead screw in the power transfer from the fly-wheel to the generator which will act as a shock absorber and clutch safety for the system by that the magnetic lead screw will be slipping if jerky movements are experienced which are outside the desired properties.

Unpredictable jerky movements are a known problem of wave power installations which over time deteriorates and destroys generator, gearboxes or other mechanics. This will not be a problem in the present invention as the magnetic lead screw will even such temporary extreme peeks so that the generator is provided with an even and predictable load and rotational speed for energy production.

Accordingly, idle operation is performed by that the surface buoy, arranged to the wire at one side, will pull the wire upwards and the submerged buoy, arranged to the wire at the other side, will be pulled downwards when a passing wave affects the surface buoy, resulting in a vertical movement of the wire engaging the fly-wheel which drives the generator. In a similar manner, when the wave has passed the submerged buoy will pull the wire upwards as the upward force from the wave on the surface buoy is reduced, resulting in vertical movement of the wire in upwards direction by the submerged buoy engaging the fly-wheel in the other direction.

Accordingly, affection of a passing wave will result in an oscillating vertical movement of the wire which engages the fly-wheel in two different directions, with approximately 50 % of the wave amplitude in each direction.

This oscillating rotation of the fly-wheel is, according to the present invention, via the magnetic lead screw geared up to a rotation speed of 1000-2000 rpm adapted a three-phase generator.

The generator, magnetic lead screw and fly-wheel are arranged in a housing at the seabed being filed with Nitrogen with the same pressure as the local depth pressure outside. This will reduce the difference between interior and exterior pressure reducing pressure affection on seals and cable gland, and holds corrosion away in the housing by that all Oxygen is gone.

The widely variating and oscillating power being generated from such generators is according to a further embodiment of the present invention collected in at least one energy storage where all the randomized power peaks continuously are coordinated and stored in e.g. a large condenser package.

According to a further embodiment of the present invention the power in the energy storage is transferred to a transfer unit transforming the power to a desired and even alternating current with high voltage at 50-60 Hz for transfer to shore via cable.

According to a further embodiment the energy storage and transfer unit are combined in the same unit.

These transformer components are off the shelf components used in water power and subsea industry and are know for a skilled person and not further discussed herein.

During daily and idle operation the generator of the present invention will produce energy during all normal wave heights.

This can be achieved by that the balanced wave converter with the submerged buoy acting as a counterweight buoy close to the seabed will handle all wave heights continuously (until maximal stroke length is achieved) and also compensates for tide differences and extreme wave peaks (so-called heave-compensation).

Accordingly, if the primary system does not absorb peaks and overload from a sudden choppy wave it will be absorbed by that the magnetic lead screw positioned in front of the generator slips and thus protects the generator from undesired loads which could damage the generator, shaft and bearings.

The balanced wave power converter system according to the present will thus work in a simple manner during all normal weather conditions and wave signatures where stroke length and dimensioning of the buoys, and their balance, are dimensioned according to the wave pattern in the actual area.

During idle operation the balanced wave power converter system is more or less self-correcting without no need for control. Accordingly, the balanced wave power converter system runs and controls itself mechanically based on nature laws.

All relevant and continuous control will be made at the energy storage and power transmission end, but this will not have anything to do with the generator or buoys.

According to the present invention the balanced wave power converter system is arranged for storm protection. According to the present invention this is achieved by that there is arranged at least one winch in the housing at the seabed, where the winch is arranged to control the wire extending between the buoys, and by that the surface buoy is provided with means for diving below the water surface in the form of at least one ballast tank arranged for adjusting buoyancy by adding ballast in the form of water. The ballast tank(s) is/are preferably integrated in the surface buoy, preferably in an upper part thereof.

At extreme weather conditions, i.e. when either maximal stroke length is achieved for the system or a kilopond meter (KP-meter) arranged in connection with the power transmission to the generator informs that limit loads are reached for the wire and/or generator, the balanced wave converter system is arranged to dive, i.e. the surface buoy is arranged to dive below the water surface for protection of the system.

According to the present invention this can be achieved in a considerable easier way than what is described in prior art, by that the winch used for pulling the surface buoy down below the water surface is arranged in the housing at the seabed and one thus not need advanced controller, power supply and winches in the surface buoy, at the same time as one avoids the need for communication with the surface buoy in submerged condition. This due to the surface buoy will rise again by releasing the winch at the seabed and by that the surface buoy is arranged to drain itself when it reaches the surface.

Accordingly, all control of the balanced wave converter system can either be arranged in the housing at the seabed, energy storage or transfer unit, while the surface buoy only will need to have some simple control functions and the submerged buoy does not need any control.

The surface buoy is further preferably provided with a simple mobile GSM communication against mobile network to receive a command/message for diving. This command can be an either or message/command which activates means for adjusting the buoyancy. The means for adjusting the buoyancy can be bottom valves controlled by a solenoid. Accordingly, no further processing force or communication is required in the surface buoy.

When a dive command is sent over the GSM network the solenoids are activated and the one or more bottom valves are opened and the surface buoy is gradually filled with water. It will then after some time be filled with water such that it almost will be pulled down by the submerged buoy, but will always have some buoyancy.

The at least one winch in the housing at the seabed can then be activated which together with the submerged buoy will pull the surface buoy below the surface to a given depth, and the wire is locked by means of a latch being a part of the winch arrangement in the housing.

The surface buoy can then be left hanging at 10-15 meters depth with certain buoyancy.

When the surface buoy is to be raised to the surface again, the latch is released by a command sent via a cable at the seabed from a control central on shore or offshore, whereupon the surface buoy will slowly rise to the surface again due its design with buoyancy and the ballast tanks will be partly self draining when the surface buoy reaches the surface.

The surface buoy is preferably further provided with an air pump which is activated when the surface buoy reaches the surfaces blowing air into the ballast tanks for full drainage, and next the bottom valves are closed and the communication via GSM is restored. Accordingly, the surface buoy will not need to communicate with the surroundings when submerged. It is only the buoyancy of the surface buoy which makes it rise to the surface again when the latch is released.

Further, the winch or winches can be replaced with one or more starting motor which can be activated to control the wire via the fly-wheel, possibly two starting motors which help in the raising of the surface buoy if required.

This gives many advantages over prior art. Firstly, the surface buoy will reduce the price of production of the surface buoy as it will not need an expensive winch, advanced power control and expensive communication means for communication under water.

Secondly, as the buoyancy is based on the design of the buoy it can be submerged for a long time, several weeks or even months and does not need continuous power supply to "live". When it is released it will rise up due to its buoyancy, even if it is out of power, gradually automatic lock the bottom valves, which preferably are positively locked (locks when the power is emptied), and gradually start production again. At the same time, energy storage, such as batteries, in the surface buoy will be charged by solar cells and/or possibly a small wind turbine or mini wave generator, and gradually wake up again and empty the ballast tanks 100 %. This is an important feature for all areas which are covered with ice one or more months in the year.

Further, in daily/idle operation it is provided a simple and reliable system against the problems with jerky movements and which in practice handle all daily wave heights.

It is further achieved a balanced wave power converter system with a diving function which is less expensive and less advanced to produce than prior art solutions and which automatically will raise to the surface again when the latch is released and which can be submerged over as long periods of time as desired.

Further, the balanced wave power converter system according to the present invention provides a less expensive generator solution than the prior art solutions.

Further preferable features and advantageous details of the present invention will appear from the following example description, claims and attached drawings.

### Example

The present invention will below be described in further detail with references to the accompanying drawings, where:
Figure 1 is a principle drawing of a balanced wave power converter system according to the present invention,
Figure 2 is a principle drawing of components related to the generator, and
Figure 3 is a principle drawing of processing of harvested energy.

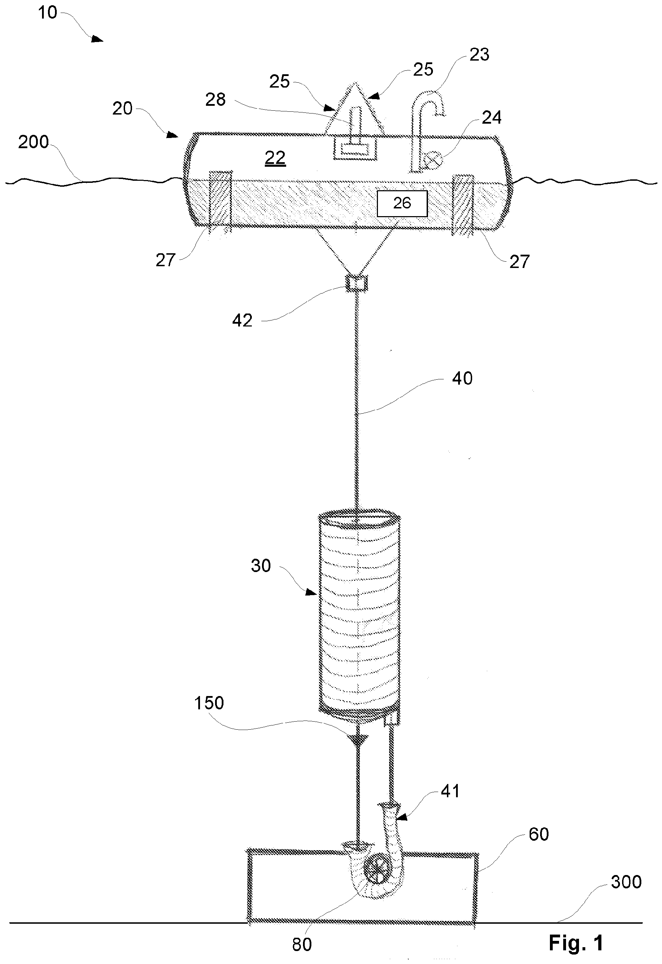

Reference is now made to Figure 1 which is a principle drawing of a wave power converter system 10 according to the present invention. A wave power converter system 10 according to the present invention includes at least two buoys, at least one surface buoy 20 and at least one submerged buoy 30, which buoys 20, 30 are connected by a wire 40 extending therebetween. The wave power converter system 10 further includes a three-phase generator 50 arranged at the seabed 300 enclosed by a housing 60.

The surface buoy 10 is placed in a sea area 200 in which stable high wave movements are expected without regularly occurring extreme weather. The surface buoy 10 is compact casted buoy mainly filled with air, but may also contain foam material.

To a shaft 51 of the generator 50 is arranged a magnetic lead screw 70 which again is arranged to a shaft 71 extending out of the housing 60 where a fly-wheel 80 is arranged. There is arranged a sealing 52 where the shaft 71 extends out of the housing 60 and the housing 60 is filled with Nitrogen with the same pressure as local depth pressure outside, creating an interior environment free for Oxygen, as well as minimizing the pressure difference between the interior of the housing 60 and the environment.

The submerged buoy 30 is accommodating the wire 40 so that the wire 40 can extend from the surface buoy 20 and down through the submerged buoy 30, around the fly-wheel 80 and up to the submerged buoy 30 again where it is fixed.

The wire 40 is preferably arranged to the surface buoy 20 via a rotation link 42 allowing the surface buoy 20 to rotate due to weather and wind without resulting in twist in the wire 40.

According to a preferable embodiment of the present invention the buoyancy of the submerged buoy 30 is approximately 50 % or less of the buoyancy of the surface buoy 20 in initial conditions.

Accordingly, when a passing wave hits the surface buoy 20 it will pull the wire 40 upwards due to forces acting from the wave with the submerged buoy 30 acting as a counterweight maintaining the wire 40 tensioned. When the wave has passed the surface buoy 20, the submerged buoy 30 will pull the wire 40 upwards as the forces from the passing wave on the surface buoy 20 will gradually be reduced. Accordingly, movement of the surface buoy 20 and the submerged buoy 30 in vertical direction due to passing waves will result in oscillating rotation of the fly-wheel 80 driving the generator 50 producing energy.

It will further be preferable that it in connection with the fly-wheel 80 is arranged a wire guide 41 to ensure that the wire 40 at all times is connected to the fly-wheel 80.

Further, the magnetic lead screw 70 will, in addition to gearing up the rotation speed to 1000-2000 rpm, act as a shock absorber and clutch safety for the system, such that if a jerky movements in vertical direction is experienced or a passing wave is larger than the stroke length, the magnetic lead screw 70 will slip and the generator 50, fly-wheel 80 and shafts 51, 71, as well as bearings associated therewith, will not experience unpredictable loads.

Figure 1 further shows schematically a sectional side view of the surface buoy 20 positioned in the sea 200 and by wave movements is moving up and down. The surface buoy 20 has preferably an internal bulkhead or double-wall bottom 21 which limits a ballast tank 22 for receiving water in upper part thereof.

The ballast tank 22 is connected to a vertical ventilation pipe 23 which inside the surface buoy 20 is connected to a compressor 24 via a valve (not shown). The surface buoy 20 is furthermore provided with energy supply means, such as a solar cell plant including at least one solar cell panel 25 arranged on top of the surface buoy 20, and at least one battery 26.

The surface buoy 20 further includes at least one bottom valve 27, in the example shown two, for discharging water from the ballast tank 22, which bottom valves 27 can be controlled by solenoids (not shown).

Furthermore the surface buoy 20 is provided with communication means 28, such as a GSM antenna, for receiving and sending signals from/to an external network. This is described more in details below.

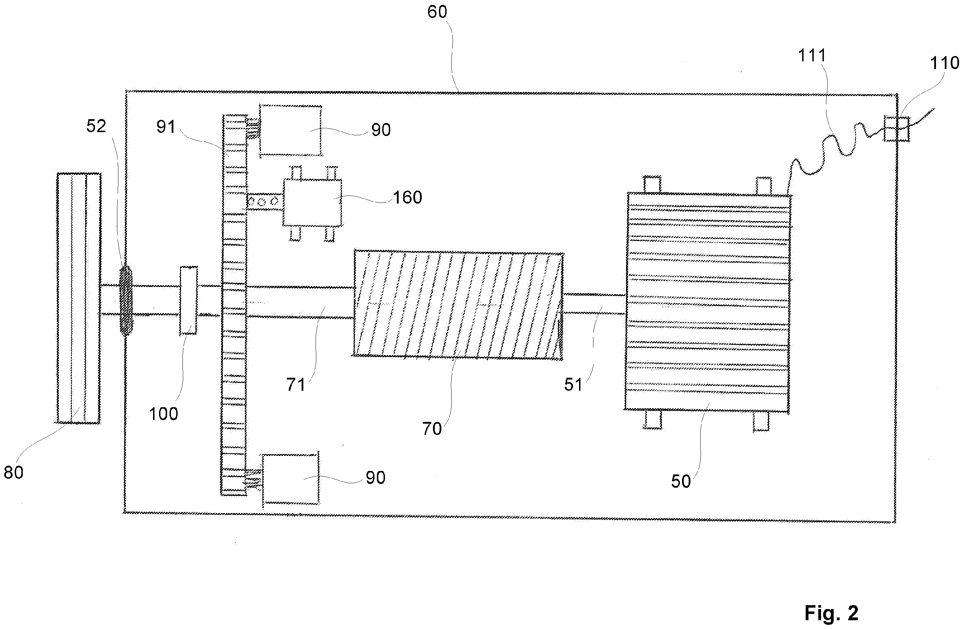

Reference is now made to Figure 2. The balanced wave power converter system 10 according to the invention further preferably includes at least one winch 90 arranged to the shaft 71 of the magnetic lead screw 70 interior the housing 60 by means of a toothed wheel 91, which at least one winch 90 can be used to pull the surface buoy 20 under the water surface when desired.

To the shaft 71 of the magnetic lead screw 70 is further preferably arranged a Kilopond meter 100 which can be used to measure the tension in the wire 40.

There is further arranged a sealed cable gland 110 for a wire 111 for transfer of energy produced by the generator 50 out of the housing 60.

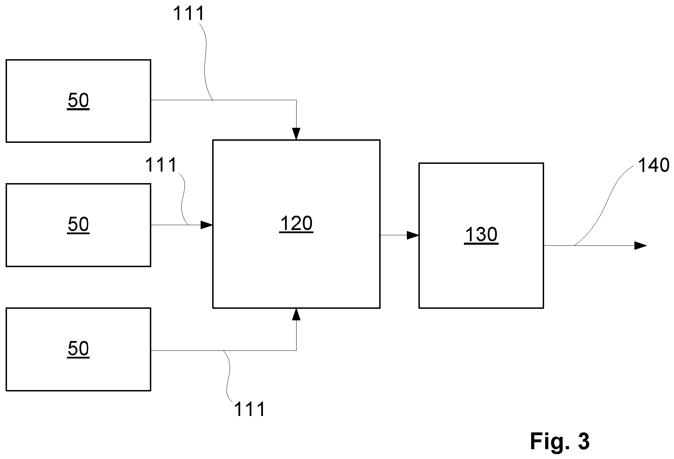

Reference is now made to Figure 3 showing transfer of energy from the generator 50. Each generator 50 transfer produced energy to one or more energy storages 120 e.g. formed by a large condenser package, where produced energy from each generator 50 continuously is coordinated and stored.

The energy from the energy storage 120 can further be transferred to a transfer unit 130 which transforms the energy to a desired an even alternating current with high voltage at 50-60 Hz for transfer to shore or offshore installation via a cable 140 which is part of an interconnecting network with connection to a shore based or offshore based consumer network.

The entire wave power converter system can be remotely monitored from a central onshore, offshore or the like. When critical weather conditions are forecasted, a message/command is sent via the GSM network to the surface buoy 20 to open the bottom valves 27 for diving. At the same time, or some later after the surface buoy is filled with water, a message/command is sent via the cable 140 to the winch 90 which is activated and starts pulling the surface buoy 20 down into the water together with the buoyancy of the submerged buoy 30, while the submerged buoy 30 by its buoyancy in addition will keep the wire 40 tensioned.

When the surface buoy 20 has reached desired depth which can be controlled by a stopper 150 arranged on the wire 40, the winch 90 is stopped and a latch 160 is activated locking the toothed wheel and keeping the system stabilized and no production is performed.

Due to the ballast tank 22 has limited volume, the surface buoy 20 will maintain some buoyancy even in submerged position.

Also the KP meter 100 or when maximal stroke length of the generator 50 is experienced this will send a message to the control central which can activate the diving procedure.

When the extreme weather is over and the surface buoy 20 is to rise to the surface again a command/message is sent to the latch 160 from the control central which releases the locking of the toothed wheel 91 and the buoyancy of the surface buoy 20 results in that the surface buoy 20 will raise to the surface, while the submerged buoy 30 maintains the tension in the wire 40.

When the surface buoy 20 has reached the surface, the air compressor 24 starts to pump air into the ballast tank 22. When a certain overpressure has been reached, the bottom valve 27 is opened again so that the water is gradually forced out by the air pressure. When the ballast tank 22 is empty, the bottom valve 27 is again closed and the surface buoy 20 is back in normal operation.

The procedure of opening the bottom valves 27, letting in some water and "blowing the water out again" can be performed at certain intervals (e.g. once a week) automatically to prevent undesired growth of biological material in the bottom valve or the bottom valves 27 and their mechanics, if there are long periods without any immersion of the surface buoy 20 caused by storms.

Accordingly, in idle/normal operation the balanced system with the surface buoy 20 and submerged buoy 30 continuously and without need for control adapt to the local waves and wave characteristics.

### Modifications

The shown structure of the surface buoy can be changed in different ways, among others, to reduce wind resistance.

As a safety measure the surface buoy can be provided with a gas ampoule that ensures that the surface buoy can be returned to the surface by immediately removing water from the ballast tank.

The surface buoy can further be provided with means for acquiring information in connection with the surface buoy to detect objects moving towards the surface buoy, such as drift ice, vessels and the like, so that a message can be sent to the control central to initiate diving procedure to avoid damage or breakdown. This can for example be a simple form of laser radar.

The surface buoy can be provided with several ballast tanks if desired.

## Claims

1. Balanced wave power converter system including at least one surface buoy (20) and at least one submerged buoy (30), the buoys (20, 30) being connected to each other by means of a wire (40), wherein the wire (40) is connected to a three-phase generator (50) via a fly-wheel (80) between the two buoys (20, 30), wherein the generator (50) is arranged in a housing (60) at a seabed (300) under the buoys (20, 30), and which surface buoy (20) is provided with at least one ballast tank (22) for adjustment of the buoyancy of the surface buoy (20), wherein the submerged buoy (30) is arranged for accommodating the wire (40), and that the wire (40) is fixed to the surface buoy (20) and extends down from the surface buoy (20), through the submerged buoy (30), around the fly-wheel (80) and up to the submerged buoy (30) where it is fixed, and wherein the submerged buoy (30) exhibits a buoyancy being lower than the buoyancy of the surface buoy (20), **characterized in that** a magnetic lead screw (70) is arranged in the power transfer from the fly-wheel (80) to the generator (50), wherein it further includes at least one winch (90) arranged inside the housing (60), the at least one winch (90) being arranged to a shaft (71) of the magnetic lead screw (70) by means of a toothed wheel (91) for controlling the wire (40) via the fly-wheel (80).

2. Balanced wave power converter system according to claim 1, **characterized in that** the submerged buoy (30) exhibits a buoyancy being 50 % or lower than the surface buoy (20).

3. Balanced wave power converter system according to claim 1, **characterized in that** the surface buoy (20) is provided with a compressor (24) and at least one bottom valve (27) for discharging and supplying water/air, respectively, to/from the ballast tank (22).

4. Balanced wave power converter system according to claim 1, **characterized in that** the surface buoy (20) is provided with energy supply in the form of one or more of:
- a solar cell plant including at least one solar cell (25) and at least one battery (26),
- mini wave generator being arranged in connection with the surface buoy (20) and at least one battery (26),
- mini windmill arranged to the surface buoy (20) and at least one battery (26).

5. Balanced wave power converter system according to claim 1, **characterized in that** the at least one ballast tank (22) is integrated in the surface buoy (20), in an upper part of this.

6. Balanced wave power converter system according to claim 1, **characterized in that** the surface buoy (20) is provided with communication means (28) for direct communication with an external control central.

7. Balanced wave power converter system according to claim 1, **characterized in that** it further includes a latch (160) arranged in connection with the toothed wheel (91) for locking of the toothed wheel (91) and shaft (71), as well as the wire (40).

8. Balanced wave power converter system according to any one of the preceding claims, **characterized in that** it further includes a Kilopond meter (100) arranged in the housing (60), in connection with the shaft (71) of the magnetic lead screw (70) for measuring tension in the wire (40).

9. Balanced wave power converter system according to claim 1, **characterized in that** the housing (60) is filled with Nitrogen.

10. Balanced wave power converter system according to any one of the preceding claims, **characterized in that** it further includes an energy storage (120) arranged for continuous coordination and storing of energy produced by generators (50).

11. Balanced wave power converter system according to claim 10, **characterized in that** it further includes a transfer unit (130) arranged for transforming the power from the energy storage (120) to a desired an even alternating current with high voltage for transfer via a cable (140) to a consumer.

12. Balanced wave power converter system according to claim 3, **characterized in that** it further includes a control central arranged for commanding the surface buoy (20) to dive by activating the bottom valves (27) and commanding the winch (90) to pull the surface buoy (20) down below the surface.

13. Balanced wave power converter system according to any one of the preceding claims, **characterized in that** the surface buoy (20) is arranged to the wire (40) via a rotation link (42).

## Patentansprüche

1. Ausgeglichenes Wellenleistungswandlersystem, das mindestens eine Oberflächenboje (20) und mindestens eine untergetauchte Boje (30) enthält, wobei die Bojen (20, 30) mittels eines Kabels (40) miteinander verbunden sind, wobei das Kabel (40) über ein Schwungrad (80) zwischen den beiden Bojen (20, 30) mit einem Drehstromgenerator (50) verbunden ist, wobei der Generator (50) in einem Gehäuse (60) an einem Meeresboden (300) unter den Bojen (20, 30) angeordnet ist, und wobei die Oberflächenboje (20) mit mindestens einem Ballasttank (22) zur Einstellung des Auftriebs der Oberflächenboje (20) versehen ist, wobei die untergetauchte Boje (30) zum Aufnehmen des Kabels (40) angeordnet ist und wobei das Kabel (40) an der Oberflächenboje (20) befestigt ist und sich von der Oberflächenboje (20) nach unten durch die untergetauchte Boje (30) um das Schwungrad (80) herum und nach oben zu der untergetauchten Boje (30) erstreckt, wo es befestigt ist, und wobei die untergetauchte Boje (30) einen Auftrieb aufweist, der geringer als der Auftriebder Oberflächenboje (20) ist, **dadurch gekennzeichnet, dass** eine magnetische Leitspindel (70) in der Leistungsübertragung vom Schwungrad (80) zum Generator (50) angeordnet ist, wobei es ferner mindestens eine Winde (90) enthält, die innerhalb des Gehäuses (60) angeordnet ist, wobei die mindestens eine Winde (90) mittels eines Zahnrades (91) zum Steuern des Kabels (40) über das Schwungrad (80) an einer Welle (71) der magnetischen Leitspindel (70) angeordnet ist.

2. Ausgeglichenes Wellenleistungswandlersystem nach Anspruch 1, **dadurch gekennzeichnet, dass** die untergetauchte Boje (30) einen Auftrieb aufweist, der 50 % oder geringer ist als der der Oberflächenboje (20).

3. Ausgeglichenes Wellenleistungswandlersystem nach Anspruch 1, **dadurch gekennzeichnet, dass** die Oberflächenboje (20) mit einem Kompressor (24) und mindestens einem Bodenventil (27) zum Ablassen beziehungsweise Zuführen von Wasser/Luft in den/aus dem Ballasttank (22) versehen ist.

4. Ausgeglichenes Wellenleistungswandlersystem nach Anspruch 1, **dadurch gekennzeichnet, dass** die Oberflächenboje (20) mit einer Energiezufuhr in der Form von einem oder mehreren der folgenden versehen ist:
- einer Solarzellenanlage, die mindestens eine Solarzelle (25) und mindestens eine Batterie (26) enthält;
- einem Miniwellengenerator, der in Verbindung mit der Oberflächenboje (20) und mindestens einer Batterie (26) angeordnet ist,
- und/oder einer Miniwindmühle, die an der Oberflächenboje (20) und mindestens einer Batterie (26) angeordnet ist.

5. Ausgeglichenes Wellenleistungswandlersystem nach Anspruch 1, **dadurch gekennzeichnet, dass** der mindestens eine Ballasttank (22) in einen oberen Teil der Oberflächenboje (20) integriert ist.

6. Ausgeglichenes Wellenleistungswandlersystem nach Anspruch 1, **dadurch gekennzeichnet, dass** die Oberflächenboje (20) mit Kommunikationsmitteln (28) zur direkten Kommunikation mit einer externen Steuerzentrale versehen ist.

7. Ausgeglichenes Wellenleistungswandlersystem nach Anspruch 1, **dadurch gekennzeichnet, dass** es ferner eine in Verbindung mit dem Zahnrad (91) angeordnete Klinke (160) zum Verriegeln von Zahnrad (91) und Welle (71) sowie des Kabels (40) enthält.

8. Ausgeglichenes Wellenleistungswandlersystem nach einem der vorhergehenden Ansprüche, **dadurch gekennzeichnet, dass** es ferner ein im Gehäuse (60) angeordnetes Kilopond-Messgerät (100) in Verbindung mit der Welle (71) der magnetischen Leitspindel (70) zum Messen der Spannung im Kabel (40) enthält.

9. Ausgeglichenes Wellenleistungswandlersystem nach Anspruch 1, **dadurch gekennzeichnet, dass** das Gehäuse (60) mit Stickstoff befüllt ist.

10. Ausgeglichenes Wellenleistungswandlersystem nach einem der vorhergehenden Ansprüche, **dadurch gekennzeichnet, dass** es ferner einen Energiespeicher (120) enthält, der zur kontinuierlichen Koordination und Speicherung der von den Generatoren (50) erzeugten Energie angeordnet ist.

11. Ausgeglichenes Wellenleistungswandlersystem nach Anspruch 10, **dadurch gekennzeichnet, dass** es ferner eine Übertragungseinheit (130) enthält, die dazu angeordnet ist, die Leistung aus dem Energiespeicher (120) in einen gewünschten und gleichmäßigen Wechselstrom mit hoher Spannung zur Übertragung über ein Leitungskabel (140) an einen Verbraucher umzuwandeln.

12. Ausgeglichenes Wellenleistungswandlersystem nach Anspruch 3, **dadurch gekennzeichnet, dass** es ferner eine Steuerzentrale enthält, die so angeordnet ist, dass sie der Oberflächenboje (20) den Befehl gibt, abzutauchen, indem sie die Bodenventile (27) aktiviert und der Winde (90) den Befehl gibt, die Obe rflächenboje (20) unter die Oberfläche zu ziehen.

13. Ausgeglichenes Wellenleistungswandlersystem nach einem der vorhergehenden Ansprüche, **dadurch gekennzeichnet, dass** die Oberflächenboje (20) über eine Drehverbindung (42) an dem Kabel (40) angeordnet ist.

## Revendications

1. Système de convertisseur de puissance houlomotrice équilibrée comportant au moins une bouée de surface (20) et au moins une bouée immergée (30), les bouées (20, 30) étant reliées entre elles au moyen d'un fil (40), le fil (40) étant relié à un générateur triphasé (50) par l'intermédiaire d'un volant d'inertie (80) entre les deux bouées (20, 30), le générateur (50) étant agencé dans un boîtier (60) au niveau du lit marin (300) sous les bouées (20, 30), et laquelle bouée de surface (20) étant pourvue d'au moins une caisse de ballast (22) pour régler la flottabilité de la bouée de surface (20), la bouée immergée (30) étant agencée pour recevoir le fil (40), et le fil (40) étant fixé à la bouée de surface (20) et descendant de la bouée de surface (20), par la bouée immergée (30), autour du volant d'inertie (80) et jusqu'à la bouée immergée (30) où il est fixé, et la bouée immergée (30) présentant une flottabilité inférieure à la flottabilité de la bouée de surface (20), **caractérisé en ce qu'**une vis-mère magnétique (70) est agencée dans le transfert de puissance du volant d'inertie (80) au générateur (50), comportant en outre au moins un treuil (90) agencé à l'intérieur du boîtier (60), l'au moins un treuil (90) étant agencé pour un arbre (71) de la vis mère magnétique (70) au moyen d'une roue dentée (91) pour commander le fil (40) par l'intermédiaire du volant d'inertie (80).

2. Système de convertisseur de puissance houlomotrice équilibrée selon larevendication 1, **caractérisé en ce que** la bouée immergée (30) présente une flottabilité de 50% ou moins que la bouée de surface (20).

3. Système de convertisseur de puissance houlomotrice équilibrée selon larevendication 1, **caractérisé en ce que** la bouée de surface (20) est pourvue d'un compresseur (24) et d'au moins une vanne de fond (27) pour décharger et fournir respectivement de l'eau/de l'air vers/depuis lacaisse de ballast (22).

4. Système de convertisseur de puissance houlomotrice équilibrée selon larevendication 1, **caractérisé en ce que** la bouée de surface (20) est pourvue d'une alimentation en énergie sous la forme :
- d'une installation de cellules solaires comportant au moins une cellule solaire (25) et au moins une batterie (26), et/ou
- d'un mini-onduleur agencé en liaison avec la bouée de surface (20) et au moins une batterie (26), et/ou
- d'une mini-éolienne agencée à la bouée de surface (20) et au moins une batterie (26).

5. Système de convertisseur de puissance houlomotrice équilibrée selon la revendication 1, **caractérisé en ce que** l'au moins une caisse de ballast (22) est intégrée dans la bouée de surface (20), dans une partie supérieure de celle-ci.

6. Système de convertisseur de puissance houlomotrice équilibrée selon la revendication 1, **caractérisé en ce que** la bouée de surface (20) est pourvue d'un moyen de communication (28) pour une communication directe avec une centrale de commande externe.

7. Système de convertisseur de puissance houlomotrice équilibrée selon larevendication 1, **caractérisé en ce qu'**il comporte en outre un verrou (160) agencé en liaison avec la roue dentée (91) pour bloquer la roue dentée (91) et l'arbre (71), ainsi que le fil (40).

8. Système de convertisseur de puissance houlomotrice équilibrée selon l'une quelconque des revendications précédentes, **caractérisé en ce qu'**il comporte en outre un compteur kilogramme-poids (100) agencé dans le boîtier (60), en liaison avec l'arbre (71) de la vis-mère magnétique (70) pour mesurer la tension dans le fil (40).

9. Système de convertisseur de puissance houlomotrice équilibrée selon la revendication 1, **caractérisé en ce que** le boîtier (60) est rempli d'azote.

10. Système de convertisseur de puissance houlomotrice équilibrée selon l'une quelconque des revendications précédentes, **caractérisé en ce qu'**il comporte en outre un stockage d'énergie (120) agencé pour coordonner et stocker en continu l'énergie produite par des générateurs (50).

11. Système de convertisseur de puissance houlomotrice équilibrée selon la revendication 10, **caractérisé en ce qu'**il comporte en outre une unité de transfert (130) agencée pour transformer la puissance du stockage d'énergie (120) en un courant alternatif uniforme àhaute tension souhaité pour le transfert par l'intermédiaire d'un câble (140) à un consommateur.

12. Système de convertisseur de puissance houlomotrice équilibrée selon la revendication 3, **caractérisé en ce qu'**il comporte en outre une centrale de commande agencée pour commander à la bouée de surface (20) de plonger en activant les vannes de fond (27) et en commandant au treuil (90) de tirer la bouée de surface (20) sous la surface.

13. Système de convertisseur de puissance houlomotrice équilibrée selon l'une quelconque des revendications précédentes, **caractérisé en ce que** la bouée de surface (20) est agencée sur le fil (40) par l'intermédiaire d'un lien de rotation (42).
